# EUROPEAN PATENT SPECIFICATION

(11) **EP 1 345 977 B1**
(45) Date of publication and mention of the grant of the patent: **09.03.2011**
(21) Application number: 01985441.3
(22) Date of filing: 21.12.2001
(51) Int. Cl.: C08G 18/76, C08G 18/78, C08K 5/5333, C08K 3/00

(54) **ISOCYANIC COMPOSITIONS AND USE THEREOF IN THE PREPARATION OF EXPANDED POLYURETHANES WITH IMPROVED FIRE BEHAVIOUR**
ZUSAMMENZETZUNG ENTHALTEND ISOCYAN-VERBINDUNGEN UND DEREN VERWENDUNG IN DER HERSTELLUNG VON EXPANDIERTEN POLYURETHANEN MIT VERBESSERTER FEUERBESTANDIGKEIT
COMPOSITIONS ISOCYANIQUES ET LEUR UTILISATION DANS LA PREPARATION DE POLYURETHANES EXPANSES AVEC UN COMPORTEMENT AU FEU AMELIORE

(30) Priority: 22.12.2000 IT MI20002797
(43) Date of publication of application: 24.09.2003
(73) Proprietor: DOW GLOBAL TECHNOLOGIES INC., Midland MI 48674 (US)
(72) Inventor: SAM, Felix, Okon, I-35020 Ponte San Nicolo (PD) (IT); BERTOLIN, Michele, I-30030 Borbiago (VE) (IT); TOLOMEI, Angelo, I-30030 Oriago (VE) (IT)
(74) Representative: Raynor, John
(86) International application number: PCT/EP2001/015276
(87) International publication number: WO 2002/051904

(56) References cited:
- EP-A- 0 884 340
- GB-A- 1 094 717
- US-A- 4 530 777
- DATABASE WPI Section Ch, Week 198049 Derwent Publications Ltd., London, GB; Class A25, AN 1980-87968C XP002197613 & SU 729 207 A (MARKOVSKII L N), 30 April 1980 (1980-04-30) cited in the application
- SAM D STEFANI B GALLO F O: "High performance flexible polyurethane foams with improved fire behaviour" JOURNAL OF CELLULAR PLASTICS, SAGE PUBLICATIONS, LONDON, GB LNKD- DOI:10.1177/0021955X9302900512, vol. 29, no. 5, 1 January 1993 (1993-01-01), pages 421-422, XP009115016 ISSN: 0021-955X

## Description

This invention relates to an isocyanic composition and to use of an isocyanic composition in the preparation of a polyurethane, in particular a flexible expanded polyurethane with improved fire behaviour.

The expression "flexible expanded polyurethane with improved fire behaviour" as used in the present description and in the claims means block, (hot- and cold-) moulded expanded polyurethane or polyurethane foam, optionally with an Integral skin, capable of giving fire resistance performance qualities which exceed, for example, the test CSE RF4, even up to the category I.IM, or test BS 5852/2 crib 5 without the use of flame-retardant additives of halogenated or phosphohalogenated type or of melamine or derivatives thereof.

In the furnishings and the motor vehicle industry, it is desirable that flexible polyurethane foams exhibit a high level of fire-resistance performance.

Such high performance levels are achieved using flame-retardant additives predispersed in the polyurethane reagents. For example, patent GB-A-2163 762 describes a process for preparing flexible polyurethane foams in which an isocyanic component is reacted with a polyol component in the presence of an expander and a flame-retardant additive.

According to GB-A-2 163 762, fire-resistant polyurethane foams may be obtained by using melamine as flame-resistant additive and a modified polyol, for example a polyol containing a polymer selected from the products of polyaddition between an alkanolamine and an isocyanate, as polyol component.

Russian patent SU 729 207 describes a process for preparing fire-resistant polyurethane foams which involves the use of a flame-retardant additive selected from bis(chloromethyl) phosphonates, predispersed in one of the two polyurethane reagents.

US-A-4 425 447 describes the use of tribromocumene as a flame-retardant agent for polyurethane foams.

The presence of flame-retardant agents or additives in the final polyurethane foam, although allowing very satisfactory fire-resistance results to be achieved, may be the cause of other drawbacks, for example, poorer physicomechanical properties of the foam itself or the release of toxic fumes in the event of combustion.

In EP-A-884 340, the problem of the presence of flame-retardant agents or additives was addresed by using an isocyanic component selected so as to give the final polyurethane foam fire-resistance characteristics without the need to use specific additives. This isocyanic component consists of a mixture comprising:
- 20 to 30% by weight of toluene diisocyanate (TDI);
- 30 to 50% by weight of TDI oligomers with an isocyanic functionality of between 3 and 4;
- 30 to 40% by weight of diphenylmethane diisocyanate (MDI) with a content of 2,4'- isomers of greater than 40% by weight

To overcome the drawbacks of the prior art associated with the use of flame-retardant agents of halogenated type the Applicant has found that expanded polyurethanes or polyurethane foams with high fire resistance can be prepared, without it being necessary to use specific flame-retardant agents or additives of the halogenated type, but rather using a novel isocyanic composition containing a simple organophosphorus additive in combination with the polyol component.

Thus, one aspect of the present invention provides an isocyanic composition with an isocyanic functionality of between 15% and 40%, comprising:
a) 5 to 75% by weight and preferably 30 to 60% of toluene diisocyanate (TDI) of biuret type, optionally modified with at least one polyether polyol with a functionality of between 2 and 8 and an equivalent weight of between 200 and 2000;
b) 0 to 30% by weight and preferably 10 to 20% of diphenylmethane diisocyanate (MDI) with a 4,4' to isomer content of greater than 40% by weight;
c) 10 to 70% by weight and preferably 20 to 50% of 2,4-toluene diisocyanate, either alone or mixed with the 2,6-toluene diisocyanate isomer,
d) 10 to 30% by weight of MDI polymer of general formula (I): 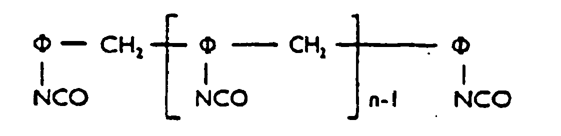 in which Φ represents a phenyl group and n is an integer greater than 1; and
e) 5 to 30% by weight and preferably 10 to 20% of a phosphorus-based flame-retardant additive, wherein the phosphorus-based frame retardant additive, wherein the phosphorus-based flame-retardant additive is free of halogens.

Preferably the sum of the components (a) to (e) is 100, that is, the composition consists of components a) to e).

According to the present invention, the term "MDI polymer" means polymethylenepolyphenyl polyisocyanates, suitably having an average functionality of between 2.6 and 2.8; such products are commercially available under various names, for instance "Tedimon 31" (Enichem S.p.A.), "Suprasec DNR" (ICI) or Desmodur 44 V20 (Bayer), while "biuret-modified TDI" means a branching product obtained from toluene diisocyanate treated with water under experimentally controlled conditions, for example, as described in European patent 177 059.

The phosphorus-based flame-retardant additive used in the isocyanic composition which is the subject of the present invention preferably comprises an organophosphorus derivatives of general formula (II): 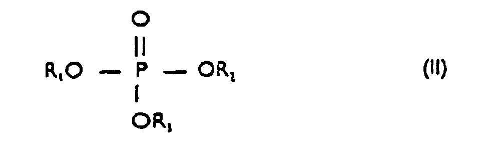 or of general formula (III): 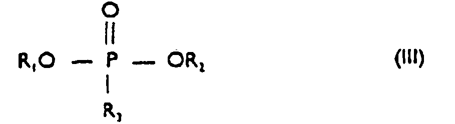 in which R₁, R₂ and R₃, which may be identical or different, represent a C₁ to C₃ (iso)alkyl radical, optionally substituted with a C₄ to C₁₀ oligomeric adduct R₁, R₂ and R₃ are -C₂H₅, the product of general formula (II) is commercially available under the trade name Fyrol TEP from the company Akzo Nobel Chemicals. Other examples of oligomeric phosphates or phosphonates are Fyrol PNX from the company Akzo Nobel Chemicals, Antiblaze V490 from the company Albright & Wilson and Exolit OP 550 from the company Clariant.

The phosphorus-based flame-retardant additive is free of halogens. Suitably, the additive does not comprise a flame-retardant additive of the halogenated or phosphohalogenated type or of melamine or derivatives thereof

A further aspect of the present invention provides a process for preparing a flexible expanded polyurethane with improved fire behaviour, which comprises reacting:
i) an isocyanic component having an isocyanic functionality of between 15% and 40%, comprising:
   a) 5 to 75% by weight and preferably 30 to 60% of toluene diisocyanate (TDI) of biuret type, optionally modified with at least one polyether polyol with a functionality of between 2 and 8 and an equivalent weight of between 200 and 2000;
   b) 0 to 30% by weight and preferably 10 to 20% of diphenylmethane diisocyanate (MDI) with a 4,4'- isomer content of greater than 40% by weight;
   c) 10 to 70% by weight and preferably 20 to 50% of 2,4-toluene diisocyanate, either alone or mixed with the 2,6-toluene diisocyanate isomer,
   d) 10 to 20% by weight of MDI polymer of general formula (I): 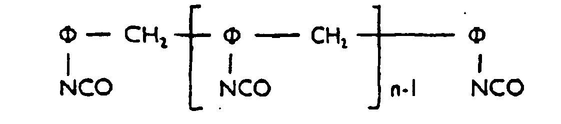 in which Φ represents a phenyl group and n is an integer greater than 1;
   e) 5 to 30% by weight and preferably 10 to 20% of a phosphorus-based flame-retardant additive; and
ii) a polyol component comprising at least one polyol, with a functionality of between 2 and 8 and an equivalent weight of between about 200 and 2000, and water,
wherein the phosphorus-based flame retardant is free of halogens.

Preferably, the sum of the components (a) to (e) of the isocyanic component is 100, that is, the isocyanic component consists of components a) to e).

The polyol used in the preparation of the flexible expanded products according to the process is suitably selected from polyether polyols, polyether polyols containing ester groups, polyether polyols containing amine groups, polyester polyols, and the like. Preferred polyols include polyether polyols obtained by condensing C₂ to C₆ olefinic oxides with compounds (starters) containing at least two active hydrogen atoms. Preferred olefinic oxides are ethylene oxide, propylene oxide or mixtures thereof.

The condensation suitably takes place with starters such as glycols, triols, tetrols, amines, alkanolamines and polyamines, or mixtures thereof.

Representative examples of polyether polyols which suitably are used according to the present invention include those based on ethylene oxide and/or propylene oxide and in which the starter is a glycol such as dipropylene glycol; a triol such as glycerol or trimethylolpropane; a tetrol such as pentaerythritol; a diamine such as ethylenediamine, an aromatic amine such as ortho-toluenediamine, an alkanolamine such as triethanolamine, or a polyfunctional hydroxyalkane such as xylitol, arabitol, sorbitol, mannitol, etc.

These polyols may be used in unmodified form or may contain, in dispersion or partially grafted to the polyol chains, solid particles, preferably solid polymer particles, which are smaller than 20 micrometres. Polymers that are suitable for this purpose are: polyacrylonitrile, polystyrene, polyvinyl chloride, etc., or mixtures or copolymers thereof, or urea-based polymers. The said solid particles may be prepared by in situ polymerization in the polyol or may be prepared separately and added to the polyol in a second stage.

The polyol composition also generally comprises further additives known for use in preparing expanded polyurethanes, such as amine catalysts, for instance triethylenediamine, and/or metallic catalysts, for instance stannous octoate, cell regulators, thermal-oxidation stabilizers, pigments, etc. Details regarding the polymerization of polyurethanes are described in, for example, the text "Saunders & Frisch - Polyurethanes, Chemistry and Technology" Interscience, New York, 1964..

In preparing the expanded polyurethanes according to the process which is the subject of the present invention, the expander preferably comprises water, which may be used alone or in combination with secondary expanders in which latter case water preferably comprises the main component of the expander. In the preparation of an expanded polyurethane, the expander suitably brings about the formation of ureic bonds associated with the production of carbon dioxide, which brings about the process of expansion/swelling of the polyurethane resin, with the production of flexible expanded products. An amount of expander of between 1 and 10 parts, especially 3 and 6 parts by weight relative to 100 parts of polyol component is preferred.

Thus, according to a preferred embodiment of the invention in which the expander comprises water, the carbon dioxide produced in situ by the chemical reaction between water and the NCO groups of the polyisocyanate is preferably used as the primary agent for expanding the polyurethane resin. The method for introducing the primary expander into the polymerization mass should not, however, be understood as a limitation, since other gases and other techniques may be used, such as, for example, sparging air, liquid CO₂, nitrogen or another inert gas into the reaction mass by injection from the outside, which are all within the scope of the present invention.

In the preparation of an expanded polyurethane of low density, for example having a density of less than or equal to 25 kg/m³, the expanding function of water alone may not be sufficient to achieve such density values without incurring drawbacks ("scorching") due to the exothermicity of the reaction between water and the isocyanic groups. For this reason, the expanding action of water may be supported by co-expanders including those selected from hydrofluoroalkanes, liquid CO₂, hydrocarbons, for instance n-pentane, i-pentane, cyclopentane, and the like, dimethyl carbonate, or mixtures thereof.

The flexible expanded polyurethane obtained according to the present process preferably has a density of between 20 and 200 kg/m³ and more preferably between 30 and 120 kg/m³. Suitably the expanded polyurethane has a lift (according to ISO standard 2439) of greater than 40 N and preferably between 80 and 400 N, are desirably is free of thermal-oxidative degradation phenomena, such as scorching, and has excellent mechanical properties such as elongation at break, permanent set, compression strength, permeability to air, and the like.

By virtue of these characteristics, the foams of the present invention may find suitable uses in the industrial sectors of furniture and/or soft furnishings and transportation and/or motor vehicles which typically employ materials with the above-mentioned properties. When subjected to the fire resistance test, products according to the present invention suitably pass the test CSE RF4 up to category 1.IM and test BS 5852/2 crib 5.

The invention is illustrated by the following, non-limiting examples.

In the examples, the amount of the various components in the compositions are expressed as parts by weight, except where otherwise indicated.

### EXAMPLE 1

An isocyanic composition obtained from:
33.0 parts by weight of Tedimon 173; 10.0 parts by weight of Tedimon 31,
44.0 parts by weight of Tedimon 80 and 13.0 parts by weight of Fyrol TEP. The resulting product has a free %NCO of 38.05.

### EXAMPLE 2

An isocyanic composition obtained by reacting:
57.8 parts by weight of Tedimon 173; 12.2 parts by weight of Tercarol 844;
1.3 parts by weight of Tercarol 241 at 70°C for about 2 hours. At the end of the reaction, 14.5 parts by weight of Fyrol TEP and 14.2 parts by weight of Tedimon 31 are added until a free %NCO of 28.5 is obtained.

### Application Examples

The compositions of Examples 1 and 2 were used to prepare flexible expanded polyurethanes in combination with the polyol components given in the table below. This table gives the physicomechanical characteristics of the foams and the results of the fire reaction tests.

**TABLE**

| | **A*** | **B*** | **C*** | **D** | **E*** |
|---|---|---|---|---|---|
| Tercarol 427 | 100 | 100 | 100 | 100 | 100 |
| Tris(monochloroisopropyl) phosphate | 15 | - | 10 | - | - |
| Melamine | - | 20 | 20 | - | - |
| DEOA | 3.0 | 3.0 | 3.0 | 3.0 | 3.0 |
| Water, pp | 2.3 | 2.3 | 2.3 | 2.3 | 2.3 |
| DABCO 33LV, pp | 0.25 | 0.25 | 0.25 | 0.25 | 0.25 |
| TEGOSTAB B 8716LF | 0.8 | 0.8 | 0.8 | 0.8 | 0.8 |
| DABCO T9 | 0.2 | 0.2 | 02 | 0.2 | 0.2 |
| TEDIMON® 80, index | 105 | 105 | 105 | - | - |
| ISOCYANATE of Example 1 (index) | - | - | - | 105 | - |
| ISOCYANATE of Example 2 index) | - | - | - | - | 105 |
| Density, kg/m³ | 40.9 | 41.8 | 43.2 | 42.5 | 45.0 |
| 50% permanent set, % | 5.0 | 5.9 | 7.1 | 6.2 | 5.3 |
| 40% compression strength, kPa | 3.1 | 3.6. | 4.1 | 3.5 | 3.3 |
| 40% lift. N | 112 | 131 | 133 | 128 | 120 |
| Elastic yield, % | 53 | 51 | 49 | 57 | 59 |
| California 117 | pass | Pass | pass | pass | pass |
| Test CSE RF4, category | 2.1 M | 2.1 M | 1.1 M | 1.1 M | 1.1 M |
| Test BS 5852/2 crib 5 | fail | fail | pass | pass | pass |

| | | | | | |
|---|---|---|---|---|---|
| TEDIMON^{®} 173 - biuret-modified TDI TEDIMON^{®} 80 - TDI 80/20 TEDIMON^{®} 31 - MDI polymer of functionality = 2.7 TERCAROL^{®} 241 - polyether polyol MW 4000 of functionality = 3 TERCAROL^{®} 84 - polyether polyol MW 4800 of functionality = 3 TERCAROL^{®} 427 - polyether polyol MW 6000 of functionality = 3 DABCO 33LV - triethylenediamine-based catalyst from Air Products DABCO T9 - tin octoate from Air Products TEGOSTAB B 8716LF - silicone surfactant from Goldschmidt * not according to the invention | | | | | |

## Claims

1. An isocyanic composition with an isocyanic functionality of between 15% and 40%, comprising:
a) 5 to 75% by weight of toluene diisocyanate (TDI) of biuret type, optionally modified with at least one polyether polyol with a functionality of between 2 and 8 and an equivalent weight of between 200 and 2000;
b) 0 to 30% by weight of diphenylmethane diisocyanate (MDl) with a 4,4' isomer content of greater than 40% by weight;
c) 10 to 70% by weight of 2,4-toluene diisocyanate, either alone or mixed with the 2,6-toluene diisocyanate isomer,
d) 10 to 30% by weight of MDI polymer of general formula (I): 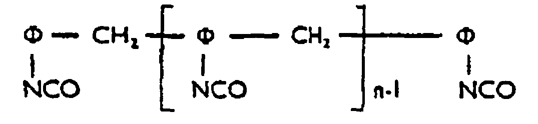 in which Φ represents a phenyl group and n is an integer greater than 1; and
e) 5 to 30% by weight of a phosphorus-based flame-retardant additive, wherein the phosphorus-based frame retardant is free of halogens.

2. An isocyanic composition according to Claim 1, comprising 30 to 60% of component a), 10 to 20% of component b) and 20 to 50°/° of component c).

3. An isocyanic composition according to any preceding claim, in which the phosphorus-based flame-retardant additive comprises an organophosphorus derivatives of general formula (II): 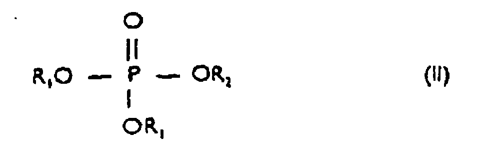 or of general formula (III): 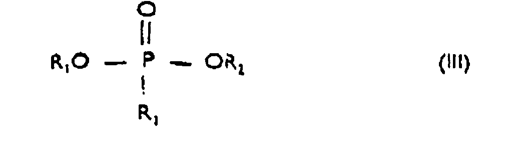 in which R₁, R₂ and R₃, which may be identical or different, represent a C₁ to C₃ (iso)alkyl radical, optionally substituted with a C₄ to C₁₀ oligomeric adduct.

4. An isocyanic composition according to any preceding claim in which the phosphorus-based flame-retardant additive is present at a level of 10 to 20%.

5. A process for preparing a flexible expanded polyurethane, which comprises reacting:
i) an isocyanic component with an isocyanic functionality of between 15% and 40%, comprising:
a) 5 to 75% by weight of toluene diisocyanate (TDI) of biuret type, optionally modified with at least one polyether polyol with a functionality of between 2 and 8 and an equivalent weight of between 200 and 2000;
b) 0 to 30% by weight of diphenylmethane diisocyanate (MDI) with a 4.4'- isomer content of greater than 40% by weight:
c) 10 to 70% by weight of 2,4-toluene diisocyanate, either alone or mixed with at least 20% by weight of 2,6-toluene diisocyanate isomer.
d) 10 to 20% by weight of MDI polymer of general formula (I): 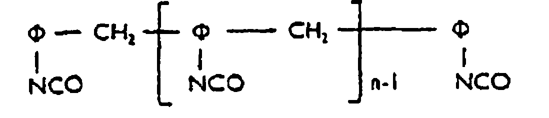 in which Φ represents a phenyl group and n is an integer greater than 1;
e) 5 to 30% by weight of a phosphorus-based flame-retardant additive; and
ii) a polyol component comprising at least one polyol, with a functionality of between 2 and 8 and ah equivalent weight of between about 200 and 2000. and water,
wherein the phosphorus-based flame-retardant is free of halogens.

6. A process according to Claim 5, in which the polyol is selected from polyather polyols, polyether polyols containing ester groups, polyether polyols containing amine groups, and polyester polyols.

7. A process according to Claim 6, in which the polyol comprises a polyether polyol obtained by condensing a C₂ to C₆ olefinic oxide with a compound (starter) containing at least two active hydrogen atoms.

8. A process according to any one of claims 5 to 7. in which the expansion of the foam takes place by sparging air, liquid CO₂, nitrogen or other inert gas into the reaction mass by injection from the outside.

9. Use of a composition according to any one of claims 1 to 4, to prepare an expanded polyurethane with improved fire behaviour, having a density of between 20 and 200 kg/m³.

## Patentansprüche

1. Isocyanzusammensetzung mit einer Isocyanfunktionalität zwischen 15% und 40%, umfassend:
a) 5 bis 75 Gew.-% Toluoldiisocyanat (TDI) vom Biuret-Typ, optional modifiziert mit mindestens einem Polyetherpolyol mit einer Funktionalität zwischen 2 und 8 und einem Äquivalentgewicht zwischen 200 und 2000;
b) 0 bis 30 Gew.-% Diphenylmethandiisocyanat (MDI) mit einem 4,4'-Isomergehalt größer als 40 Gew.-%;
c) 10 bis 70 Gew.-% 2,4-Toluoldiisocyanat, entweder allein oder gemischt mit dem 2,6-Toluoldiisocyanat-Isomer,
d) 10 bis 30 Gew.-% MDI-Polymer der allgemeinen Formel (I): 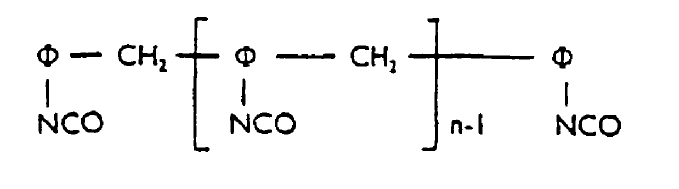 in der Φ eine Phenylgruppe repräsentiert und n eine ganze Zahl größer als 1 ist; und
e) 5 bis 30 Gew.-% eines phosphorbasierten flammwidrigen Zusatzstoffes, wobei das phosphorbasierte Flammschutzmittel frei von Halogenen ist.

2. Isocyanzusammensetzung nach Anspruch 1, umfassend 30 bis 60% von Komponente a), 10 bis 20% von Komponente b) und 20 bis 50% von Komponente c).

3. Isocyanzusammensetzung nach einem der vorhergehenden Ansprüche, bei welcher der phosphorbasierte flammwidrige Zusatzstoff ein Organophosphorderivat der allgemeinen Formel (II) umfasst: 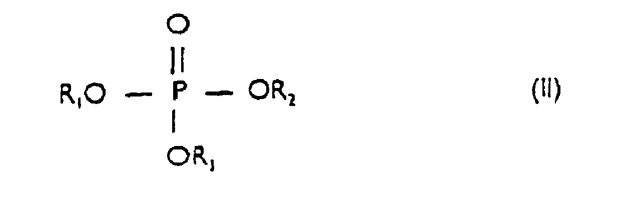 oder der allgemeinen Formel (III): 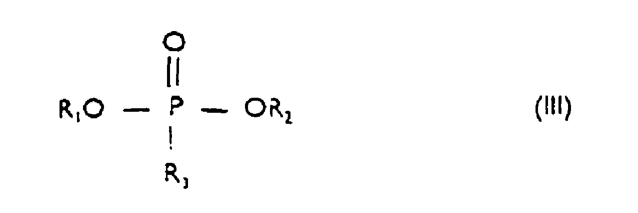 in der R₁, R₂ und R₃, die identisch oder verschieden sein können, ein C₁- bis C₃-(lso)alkylradikal repräsentieren, das optional mit einem oligomeren C₄- bis C₁₀-Addukt substituiert ist.

4. Isocyanzusammensetzung nach einem der vorhergehenden Ansprüche, bei welcher der phosphorbasierte flammwidrige Zusatzstoff in einer Konzentration von 10 bis 20% vorliegt.

5. Verfahren zur Herstellung eines flexiblen, geschäumten Polyurethans, bei dem Folgendes umgesetzt wird:
i) eine Isocyankomponente mit einer Isocyanfunktionalität zwischen 15% und 40%, umfassend:
a) 5 bis 75 Gew.-% Toluoldiisocyanat (TDI) vom Biuret-Typ, optional modifiziert mit mindestens einem Polyetherpolyol mit einer Funktionalität zwischen 2 und 8 und einem Äquivalentgewicht zwischen 200 und 2000;
b) 0 bis 30 Gew.-% Diphenylmethandiisocyanat (MDI) mit einem 4,4'-Isomergehalt größer als 40 Gew.-%;
c) 10 bis 70 Gew.-% 2,4-Toluoldiisocyanat, entweder allein oder gemischt mit mindestens 20 Gew.-% 2,6-Toluoldiisocyanat-Isomer,
d) 10 bis 20 Gew.-% MDI-Polymer der allgemeinen Formel (I): 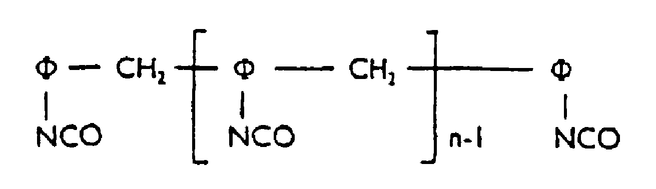 in der Φ eine Phenylgruppe repräsentiert und n eine ganze Zahl größer als 1 ist;
e) 5 bis 30 Gew.-% eines phosphorbasierten flammwidrigen Zusatzstoffes;
und
ii) eine Polyolkomponente, die mindestens ein Polyol umfasst, mit einer Funktionalität zwischen 2 und 8 und einem Äquivalentgewicht zwischen etwa 200 und 2000, und Wasser,
wobei das phosphorbasierte Flammschutzmittel frei von Halogenen ist.

6. Verfahren nach Anspruch 5, bei dem das Polyol aus Polyetherpolyolen, Estergruppen enthaltenden Polyetherpolyolen, Amingruppen enthaltenden Polyetherpolyolen und Polyesterpolyolen ausgewählt ist.

7. Verfahren nach Anspruch 6, bei dem das Polyol ein Polyetherpolyol umfasst, das man erhält durch Kondensieren eines olefinischen C₂- bis C₆-Oxids mit einer Verbindung (Starter), die mindestens zwei aktive Wasserstoffatome enthält.

8. Verfahren nach einem der Ansprüche 5 bis 7, bei dem das Aufschäumen des Schaumstoffs durch Einsprühen von Luft, flüssigem CO₂, Stickstoff oder einem anderen Inertgas in die Reaktionsmasse durch Injektion von außen stattfindet.

9. Verwendung einer Zusammensetzung nach einem der Ansprüche 1 bis 4 zur Herstellung eines Polyurethanschaums mit verbessertem Brandverhalten und mit einer Dichte zwischen 20 und 200 kg/m³.

## Revendications

1. Composition isocyanique, présentant une teneur en groupes fonctionnels de type isocyanique de 15 à 40 %, et comprenant :
a) 5 à 75 % en poids de toluène-diisocyanate (TDI) de type biuret, qui peut, en option, être modifié avec au moins un polyéther-polyol doté de 2 à 8 groupes fonctionnels et présentant un poids d'équivalent de 200 à 2000 ;
b) 0 à 30 % en poids de diphénylméthane-diisocyanate (MDI) contenant plus de 40 % en poids d'isomère 4,4' ;
c) 10 à 70 % en poids de toluène-2,4-diisocyanate, seul ou mélangé avec de l'isomère toluène-2,6-diisocyanate ;
d) 10 à 30 % en poids de polymère de type MDI, de formule générale (I) : 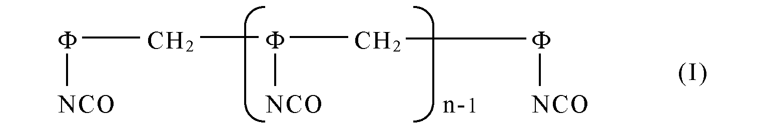 dans laquelle Φ représente un groupe phényle et l'indice n est un nombre entier supérieur à 1 ;
e) et 5 à 30 % en poids d'un adjuvant ignifugeant phosphoré, lequel adjuvant ignifugeant phosphoré ne contient pas d'halogène.

2. Composition isocyanique conforme à la revendication 1, qui comprend 30 à 60 % de composant (a), 10 à 20 % de composant (b) et 20 à 50 % de composant (c).

3. Composition isocyanique conforme à l'une des revendications précédentes, dans laquelle l'adjuvant ignifugeant phosphoré comprend un dérivé organo-phosphoré de formule générale (II) : 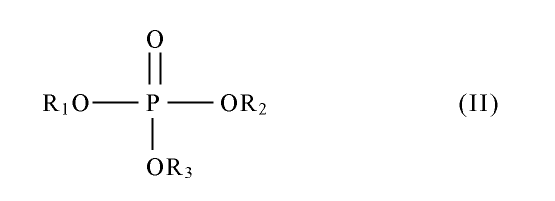 ou de formule générale (III) 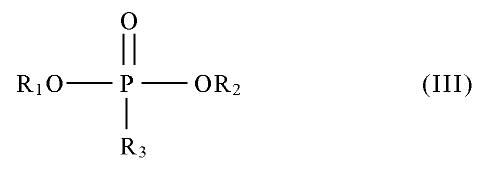 dans lesquelles formules R₁, R₂ et R₃ représentent des entités qui peuvent être identiques ou différentes et qui sont chacune un groupe alkyle ou iso-alkyle en C₁₋₃, porteur, en option, d'un substituant de type oligomère d'addition en C₄₋₁₀.

4. Composition isocyanique conforme à l'une des revendications précédentes, dans laquelle l'adjuvant ignifugeant phosphoré se trouve présent en une proportion de 10 à 20 %.

5. Procédé de préparation d'un polyuréthane expansé souple, lequel procédé comporte le fait de faire réagir :
i) un composant isocyanique présentant une teneur en groupes fonctionnels de type isocyanique de 15 à 40 %, et comprenant :
a) 5 à 75 % en poids de toluène-diisocyanate (TDI) de type biuret, qui peut, en option, être modifié avec au moins un polyéther-polyol doté de 2 à 8 groupes fonctionnels et présentant un poids d'équivalent de 200 à 2000 ;
b) 0 à 30 % en poids de diphénylméthane-diisocyanate (MDI) contenant plus de 40 % en poids d'isomère 4,4' ;
c) 10 à 70 % en poids de toluène-2,4-diisocyanate, seul ou mélangé avec au moins 20 % d'isomère toluène-2,6-diisocyanate ;
d) 10 à 20 % en poids de polymère de type MDI, de formule générale (I) : 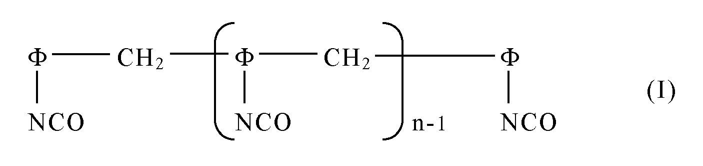 dans laquelle Φ représente un groupe phényle et l'indice n est un nombre entier supérieur à 1 ;
e) et 5 à 30 % en poids d'un adjuvant ignifugeant phosphoré ;
ii) et un composant polyol comprenant au moins un polyol, doté de 2 à 8 groupes fonctionnels et présentant un poids d'équivalent de 200 à 2000, et de l'eau ;
et dans lequel l'adjuvant ignifugeant phosphoré ne contient pas d'halogène.

6. Procédé conforme à la revendication 5, dans lequel le polyol est choisi parmi les polyéther-polyols, les polyéther-polyols comportant des groupes de type ester, les polyéther-polyols comportant des groupes de type amine, et les polyester-polyols.

7. Procédé conforme à la revendication 6, dans lequel le polyol comprend un polyéther-polyol obtenu par condensation d'un oxyde d'oléfine en C₂₋₆ avec un composé amorceur comportant au moins deux atomes d'hydrogène actifs.

8. Procédé conforme à l'une des revendications 5 à 7, dans lequel l'expansion en mousse est réalisée par dispersion d'air, de dioxyde de carbone liquide, d'azote ou d'un autre gaz inerte dans la masse réactionnelle, par injection depuis l'extérieur.

9. Utilisation d'une composition conforme à l'une des revendications 1 à 4 en vue de la préparation d'un polyuréthane expansé doté d'un comportement au feu amélioré et présentant une masse volumique de 20 à 200 kg/m³.
